# EUROPÄISCHE PATENTSCHRIFT

(11) **EP 3 061 968 B1**
(45) Veröffentlichungstag und Bekanntmachung des Hinweises auf die Patenterteilung: **30.08.2017**
(21) Anmeldenummer: 16151008.6
(22) Anmeldetag: 13.01.2016
(51) Int. Cl.: F04B 39/10, F02M 21/02, F04B 53/10, F02M 43/04

(54) **GASDOSIERVENTIL FÜR EINEN ZWEISTOFFMOTOR**
GAS DOSING VALVE FOR A DUAL FUEL ENGINE
SOUPAPE DE DOSAGE DE GAZ POUR UN MOTEUR A DEUX COMBUSTIBLES

(30) Priorität: 24.02.2015 AT 501412015
(43) Veröffentlichungstag der Anmeldung: 31.08.2016
(73) Patentinhaber: Hoerbiger Kompressortechnik Holding GmbH, 1220 Wien (AT)
(72) Erfinder: Könczöl, Martin, 2753 Markt Piesting (AT); Brandl, Christoph, 2346 Südstadt (AT)
(74) Vertreter: Patentanwälte Pinter & Weiss OG

(56) Entgegenhaltungen:
- AT-A1- 509 737
- AT-A4- 502 512
- DE-A1- 19 852 980
- JP-A- 2007 211 764
- US-A- 6 112 765

## Beschreibung

Die Erfindung betrifft ein Gasdosierventil für einen Zweistoffmotor, das einen verlagerbaren Schließkörper aufweist, der in einer an einen Ventilsitz angelagerten Position das Gasdosierventil schließt und in einer von dem Ventilsitz abgehobenen Position das Gasdosierventil öffnet, wobei der Ventilsitz entlang einer Ventilsitzführung verschiebbar angeordnet ist.

Gasdosierventile dieser Art werden beispielsweise als Saugrohreinblasung für Großgasmotoren eingesetzt, die in zwei Betriebsarten, nämlich mit Brenngas einerseits (Gasbetriebsmodus) und andererseits mit Flüssigbrennstoff (Flüssigbrennstoffbetriebsmodus) betrieben werden können. Je nach Motor kann als Flüssigbrennstoff zum Beispiel Diesel, Biodiesel, Heizöl, Schweröl, etc., verwendet werden, für den Gasbetriebsmodus kann als Brenngas beispielsweise Erdgas, Klärgas, Biogas, etc. verwendet werden. Bei Motoren für LNG-Tankschiffen wird aus dem transportierten verflüssigten Erdgas (LNG) Brenngas für den Gasbetriebsmodus entnommen, sodass die eigene Ladung auch als Kraftstoff genutzt wird.

Motoren, die in einem Gasbetriebsmodus und einem Flüssigbrennstoffmodus betrieben werden können, werden allgemein als Zweistoffmotoren bezeichnet, wobei nicht nur Großmotoren, sondern auch kleinere Motoren, etwa zum Betrieb von Kleinkraftwerken oder Generatoren, als Zweistoffmotoren ausgeführt sein können.

Bei Zweistoffmotoren, die gemäß dem sogenannten "Ported-Fuel-Prinzip" arbeiten, wird das Brenngas im Gasbetriebsmodus in das Saugrohr des Motors eingebracht. Im Unterschied dazu gibt es auch Motoren, bei denen das Brenngas direkt in die Brennkammer eingebracht wird, was jedoch vollständig andere Eigenschaften des Gasdosierventils erfordert.

Bei einem nach dem Portet-Fuel-Prinzip arbeitenden Zweistoffmotor regelt im Gasbetriebsmodus das Gasdosierventil die Zufuhr von Brenngas in das Saugrohr des Motors, wo das Brenngas der durch den Turbolader verdichteten Ladeluft zugemischt wird. Der Brenngasdruck im Gasdosierventil ist dabei erheblich höher als die Luftaufladung durch den Turbo, sodass der Schließkörper des Gasdosierventils bei geschlossener Ventilstellung immer fest gegen die Anschlagflächen des Ventilsitzes gedrückt wird. Somit muss für den Schließkörper nur eine geringe Rückstellkraft (etwa durch eine Rückstellfeder) aufgebracht werden. Der Schließkörper wird zum Öffnen des Ventils mit einem Elektromagneten gegen die gemeinsam wirkende Kraft der Rückstellfeder und des Brenngasdrucks vom Ventilsitz abgehoben, sodass Brenngas dosiert in das Saugrohr einströmen kann.

Im Flüssigbrennstoffbetriebsmodus ist die Zufuhr von Brenngas unterbrochen und das Gasdosierventil ist geschlossen. Durch die unterbrochene Gaszufuhr sinkt der Druck im Inneren des Gasdosierventils, gleichzeitig bleibt jedoch der Druck im Saugrohr unverändert hoch, da der Zweistoffmotor weiterhin in Betrieb ist und mit Flüssigbrennstoff beschickt wird. Daher drückt nur mehr die verhältnismäßig schwach dimensionierte Rückstellfeder das Schließelement auf den Ventilsitz. Da die Rückstellfeder im Gasbetriebsmodus gegen den Magneten arbeitet, ist die Federkraft limitiert und damit auch der maximale Differenzdruck zwischen der Aufladung der Ladeluft und dem Druck im Inneren des Ventils. Bei hohen Ladedrücken kann daher das Schließelement vom Ventilsitz abheben und verdichtete Luft und Schmutz kann in das Ventil eindringen. Ein Abheben kann bei herkömmlichen Ventilen beispielsweise bereits bei einer Druckdifferenz von 0,5 bar gegen die Hauptrichtung auftreten.

AT 509737 A1, die von der Anmelderin der gegenständlichen Erfindung eingereicht wurde, offenbart ein trockenlaufendes Gasventil zur Zuführung von gasförmigem Kraftstoff in den Ladeluftstrom einer Verbrennungskraftmaschine. Das Ventil wurde insbesondere für Großgasmotoren entwickelt und kann auch für Zweistoffmotoren verwendet werden, wobei jedoch die oben angeführten Probleme auftreten können. Die schaltbare Druckdifferenz von Ventilen dieser Art liegt bei etwa 10 Bar (ohne Druckausgleich), wobei der Wert unter Anderem von dem Ventiltyp und der Anzahl der Strömungsschlitze im Ventilsitz abhängig ist. Der Ladeluftdruck liegt üblicherweise in einem Bereich zwischen 0 und 9 bar[g] und der Brenngasdruck in einem Bereich zwischen 0 und 10 bar[g], wobei der Brenngasdruck im Gasbetrieb jeweils auf den gerade vorherrschenden Ladeluftdruck eingestellt wird.

Im Gegensatz zu den Gasdosierventilen, die Brenngas in die Ladeluft einblasen, gibt es Gasdosierventile, die dazu vorgesehen sind, das Gas direkt in den Brennraum zu dosieren. Da der Druck im Brennraum bei Zweistoffmotoren bis zu 200 bar (bei reinen Gasmotoren bis zu etwa 150 bar betragen kann, weisen diese Ventile einen gänzlich anderen Aufbau auf, als Gasdosierventile, die das Brenngas in die Ladeluft einbringen. Für die Einspritzung in den Brennraum müssen Gasdosierventile über ein zusätzliches Rückschlagventil verfügen, um zu verhindern, dass nach der Zündung kein Rückzünden vom Brennraum in das Brenngasventil auftritt.

AT 502512 A4, die ebenfalls von der Anmelderin der gegenständlichen Erfindung eingereicht wurde, offenbart ein solches Brenngasventil für den Brennraum eines Hubkolben-Gasmotors, wobei das Rückschlagventil in das Brenngasventil integriert ist. Das Brenngasventil hat eine bewegliche Ventilsitzplatte, die von einer separaten Rückschlagfeder gegen einen Anschlag gedrückt wird, und als Rückschlagventil wirkt, um ein Öffnen des Ventils bei brennraumseitigen Druckspitzen, etwa nach der Zündung, zu verhindern. Die Rückschlagfeder für die Ventilsitzplatte muss dabei weit stärker ausgeführt sein, als die Ventilfeder für den Schließkörper, da die als Rückschlagventil wirkende Ventilsitzplatte nach jeder Auslenkung schnell zurück in ihre Arbeitsposition gebracht werden muss, um das zeitgerechte Öffnen des Brenngasventils im nächsten Ansaugtakt zu gewährleisten. Die stellbare Druckdifferenz von Ventilen dieser Art liegt im Allgemeinen bei 17,5 bar[g].

Der wesentliche funktionelle Unterschied zwischen Brenngasventilen, die Brenngas direkt in den Brennraum dosieren (wie etwa das Ventil der AT 502512 A4) und den Gasdosierventilen, die das Brenngas in das Saugrohr dosieren (solche werden auch als "Ported Fuel Injectors" bezeichnet), und die der Gegenstand der vorliegenden Beschreibung sind, liegt darin, dass die Direkteinspritzung ein hochdynamischer Vorgang ist, der im Zuge jedes Ladungswechsels stattfinden muss, während es sich im Falle der Einspeisung von Brenngas in das Saugrohr um einen quasistatischen Vorgang handelt.

Der gegenständlichen Erfindung liegt die Aufgabe zugrunde, ein Gasdosierventil für Zweistoffmotoren zu schaffen, das einen sicheren Gasbetriebsmodus gewährleistet und darüber hinaus sicherstellt, dass während des Flüssigbrennstoffbetriebsmodus des Zweistoffmotors das Gasdosierventil stets geschlossen und dicht bleibt.

Erfindungsgemäß wird dieses Ziel durch ein Gasdosierventil der eingangs genannten Art erreicht, bei dem das Gasdosierventil in einem Gasbetriebsmodus, bei dem das Gasdosierventil Brenngas über einen Gaskanal in ein Saugrohr des Zweistoffmotors dosiert, und in einem Flüssigbrennstoffbetriebsmodus, in dem das Gasdosierventil gegen den im Saugrohr vorherrschenden Druck dichtend geschlossen bleibt, betätigbar ist, wobei das Verhältnis der dem Schließkörper zugewandten Oberfläche des Ventilsitzes zu der dem Saugrohr zugewandten Oberfläche des Ventilsitzes so gewählt ist, dass der vom Gaskanal auf den Ventilsitz wirkende Druck des Brenngases während des Gasbetriebsmodus in Axialrichtung stets eine größere Kraft auf den Ventilsitz ausübt, als die Kraft, die vom maximalen Druck im Saugrohr auf den Ventilsitz in der Gegenrichtung ausgeübt wird, wobei der Ventilsitz im Gasbetriebsmodus aufgrund des Brenngasdrucks im Gaskanal vom Schließkörper weg gegen einen Anschlag im Gasdosierventil gedrückt und in seiner betriebsmäßigen Position gehalten wird, und wobei der Ventilsitz im Flüssigbrennstoffbetriebsmodus, in welchem der Druck im Inneren des Gasdosierventils durch die unterbrochene Gaszufuhr sinkt, vom Druck im Saugrohr dichtend gegen den Schließkörper gedrückt wird. Der Schließkörper wird im Flüssigbrennstoffbetriebsmodus üblicherweise von einer Ventilfeder in der geschlossenen Position gegen den Ventilsitz gedrückt, der dadurch gegen den Anschlag gedrückt wird. Sobald der Druck im Saugrohr so groß wird, dass die vom Saugrohr her auf den Ventilsitz wirkende Kraft die Kraft der Ventilfeder übersteigt, verschiebt sich der Ventilsitz vom Anschlag weg und schiebt den Schließkörper ebenfalls gegen die Kraft der Ventilfeder ins Ventilinnere. Die maximale Auslenklage wir erreicht, sobald der Schließkörper seine maximale Auslenkung erreicht hat. Wenn der Druck im Saugrohr nachlässt, kann die Ventilfeder die Einheit aus Schließkörper und Ventilsitz wieder zurück in die Ausgangsposition drücken, bis der Ventilsitz wieder an dem Anschlag anliegt. Während der gesamten Verschiebung des Ventilsitzes bleibt der Schließkörper fest gegen den Ventilsitz gedrückt. Somit ist ein unerwünschtes Abheben des Schließkörpers vom Ventilsitz, und ein dadurch bedingtes Öffnen des Ventils während des Flüssigbrennstoffbetriebsmodus nicht möglich.

In einer vorteilhaften Ausführungsform kann der Ventilsitz eine zum Schließkörper hin gerichtete und vom Ventilsitz abstehende Schließkörperführung aufweisen, auf der der Schließkörper verschiebbar gelagert ist. Dies verwirklicht nicht nur die aus der AT 509737 A1 bekannt gewordenen Vorteile im Gasbetriebsmodus, sondern hat überdies den erfindungsgemäßen Vorteil, dass sich die Einheit aus Ventilsitz, Schließkörperführung und Schließkörper im Flüssigbrennstoffbetriebsmodus gemeinsam bewegen, und keine Toleranzfehler zwischen der Führung des Ventilsitzes und der Führung des Schließkörpers auftreten können, die gegebenenfalls die Dichtheit am Ventilsitz während der Bewegung des Ventilsitzes beeinträchtigen könnten.

In vorteilhafter Weise kann der Ventilsitz als eine Vielzahl kreisförmiger, konzentrischer Schlitze ausgebildet sein. Dabei weist der Schließkörper eine korrespondierende Anzahl konzentrischer Ringe auf, die durch radiale, um den Umfang verteilte Stege miteinander verbunden sind, und zum Schließen des Ventils gegen die konzentrischen Schlitze des Ventilsitzes gedrückt werden und diese abdichten. Dadurch lässt sich ein minimaler Ventilhub erreichen.

In einer weiteren vorteilhaften Ausgestaltung der Erfindung kann der Schließkörper mit einer Ankerplatte verbunden sein, die von einem Elektromagnet betätigt wird. In vorteilhafter Weise kann dabei der Elektromagnet in einer Magnetbasis angeordnet sein, die zentral im Gaskanal angeordnet ist. Dadurch lässt sich eine sehr kompakte Bauweise erreichen.

In einer vorteilhaften Ausführungsform kann das Gasdosierventil ein trockenlaufendes Gasdosierventil sein.

In vorteilhafter Weise kann erfindungsgemäß in der Ventilsitzführung auf beiden Seiten des Anschlags jeweils ein Dichtungselement angeordnet sein, um den Anschlag vor Verschmutzungen zu schützen.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 das erfindungsgemäße Gasdosierventil in einer Schnittansicht entlang einer Hauptachse;
Fig. 2 eine schematische Darstellung eines Zylinders eines mit dem Gasdosierventil ausgestatteten Zweistoffmotors; und
Fig. 3 eine schematische Darstellung der Zylinder eines mit dem Gasdosierventil ausgestatteten Zweistoffmotors.

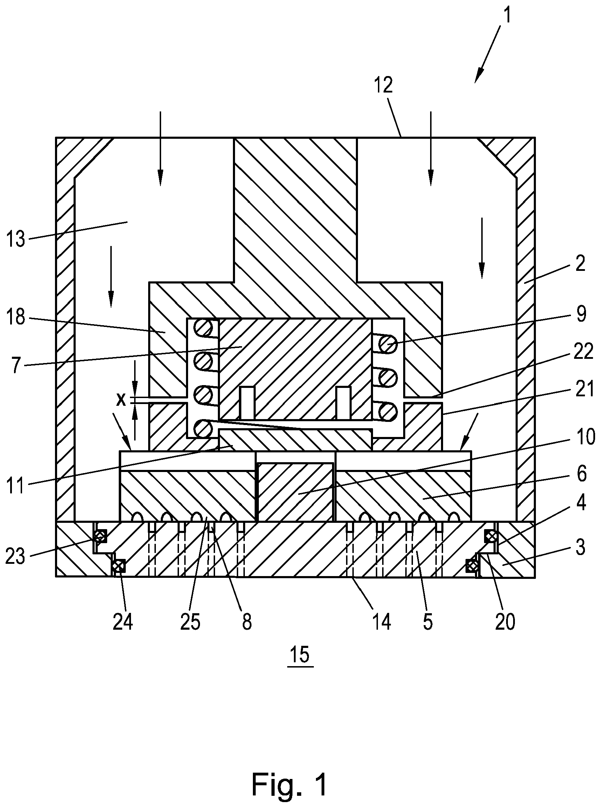

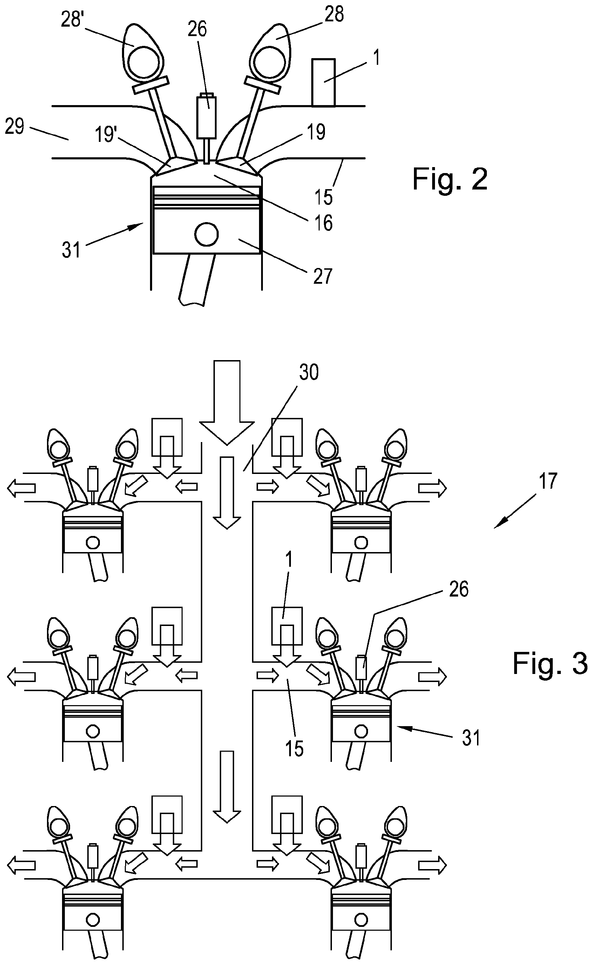

Das in Fig. 1 dargestellte erfindungsgemäße Gasdosierventil 1 weist ein Gehäuse 2 auf, in dem ein Gaskanal 13 vorgesehen ist, der von dem dosierten Brenngas durchströmt wird. Das Brenngas gelangt durch einen Gaseinlass 12 in das Gasdosierventil 1, durchströmt den Gaskanal 13 und gelangt durch einen Gasauslass 14 in ein Saugrohr 15, das zum Brennraum 16 eines Zweistoffmotors 17 (Fig. 3) führt. Im Bereich des Gasauslasses 14 befindet sich ein Ventilsitz 5, der eine Vielzahl kreisförmiger, konzentrischer Schlitze 8 aufweist, die von einem Schließkörper 6 selektiv verschlossen und freigegeben werden können. Der Schließkörper 6 weist eine korrespondierende Anzahl konzentrischer Ringe 25 auf, die durch radiale, um den Umfang verteilte Stege miteinander verbunden sind, und zum Schließen des Ventils gegen die konzentrischen Schlitze 8 des Ventilsitzes 5 gedrückt werden und diese abdichten.

Zur Betätigung des in Fig. 1 dargestellten Gasdosierventils 1 ist in dem Gaskanal 13 eine Magnetbasis 18 angeordnet, in der sich ein Elektromagnet 7 befindet. Wenn er aktiviert wird, zieht der Elektromagnet 7 eine Ankerplatte 11 und den mit der Ankerplatte 11 verbundenen Schließkörper 6 gegen die Kraft einer Rückstellfeder 9 in die geöffnete Ventilposition. Am Schließkörper 6 ist ein Anschlagring 21 vorgesehen, der in der offenen Ventilposition an einer Anschlagfläche 22 der Magnetbasis 18 angelagert ist. Sobald der Elektromagnet 7 deaktiviert ist, wird die Einheit aus Ankerplatte 11, Anschlagring 22 und Schließkörper 6 von der Rückstellfeder 9 vom Elektromagneten 7 weg gedrückt, und der Schließkörper 6 gelangt gegen den Ventilsitz 5 in Anlagerung. Der Ventilsitz 5 ist in einer Ventilsitzführung 4 verschiebbar gelagert und wird vom Druck des Brenngases gegen einen Anschlag 20 gedrückt, sodass die Position des Ventilsitzes 5 während des Gasbetriebsmodus des Zweistoffmotors 17 stets definiert ist. Die Ventilsitzführung 4 und der Anschlag 20 sind an der Innenwandung einer Ventilsitzhülse 3 ausgebildet, die mit dem Gehäuse 2 verbunden ist.

Die in Fig. 1 dargestellte Lage entspricht der geschlossenen Ventilposition im Gasbetriebsmodus, wobei der Abstand zwischen dem Anschlagring 21 und der Anschlagfläche 22 der Magnetbasis 18 dem Ventilspiel x entspricht.

Das Verhältnis der dem Schließkörper 6 zugewandten Oberfläche des Ventilsitzes 5 zu der dem Saugrohr 15 zugewandten Oberfläche des Ventilsitzes 5 ist so gewählt, dass der vom Gaskanal 13 auf den Ventilsitz 5 wirkende Druck des Brenngases während des Gasbetriebsmodus in Axialrichtung stets eine größere Kraft auf den Ventilsitz 5 ausübt, als die Kraft, die vom maximalen Druck im Saugrohr 15 auf den Ventilsitz 5 in der Gegenrichtung ausgeübt wird. Dadurch wird sichergestellt, dass der Ventilsitz 5 während des Gasbetriebsmodus immer in der durch den Anschlag 20 definierten Position gehalten wird, sodass die Funktion des Ventilsitzes 5 der eines fixen Ventilsitzes bei einem herkömmlichen Gasdosierventil entspricht. Eine zusätzliche Spannvorrichtung oder Feder, die den Ventilsitz 5 zum Anschlag 20 hin vorspannt ist somit nicht erforderlich.

In der Mitte des Ventilsitzes 5 ist eine zapfenförmige Schließkörperführung 10 vorgesehen, die mit dem Ventilsitz 5 fix verbunden ist und zur Ankerplatte hin aus dem Ventilsitz 5 herausragt. Beim Öffnen und Schließen des Gasdosierventils 1 gleitet der Schließkörper 6 auf der Schließkörperführung 10 und wird von dieser während der Öffnungs- und Schließbewegung positioniert, zentriert und geführt.

Während des Flüssigbrennstoffbetriebsmodus des Zweistoffmotors 17 ist der Elektromagnet 7 deaktiviert und die Rückstellfeder 9 drückt den Schließkörper 6 gegen den Ventilsitz 5, sodass das Gasdosierventil 1 geschlossen bleibt. Wenn die Brenngaszufuhr geschlossen wird, verringert sich der Gasdruck im Gaskanal 13. Der Schließkörper 6 wird daher ausschließlich mit der Kraft der Rückstellfeder 9 auf den Ventilsitz 5 gedrückt, wobei der Druck im Saugrohr 15 beim Betrieb des Zweistoffmotors 17 mit Flüssigbrennstoff weiterhin aufrecht bleibt. Druckdifferenzen zwischen dem Saugrohrdruck und dem Gasdruck im Ventilinneren und Druckspitzen, die beim Betrieb eines Turboladers entstehen, können dann bei herkömmlichen Ventilen dazu führen, dass die durch die Schlitze des Ventilsitzes auf den Schließkörper wirkende Druckkraft die Kraft der Rückstellfeder übersteigt, was bei einem herkömmlichen Gaswechselventil dazu führen würde, dass der Schließkörper von dem Ventilsitz abheben, und Ladeluft mit darin enthaltenen Verunreinigungen in das Gasdosierventil eindringen würde, wodurch dieses Schaden nehmen kann. Da eine höhere Federkraft der Rückstellfeder auch eine stärkere Dimensionierung des Elektromagneten erfordern würde, ist man darauf bedacht, die Federkraft so gering wie möglich zu halten, um die Kosten und die Abmessungen des Gasdosierventils zu minimieren. Eine Erhöhung der Federkraft ist daher im Allgemeinen nicht gewünscht.

Bei dem in Fig. 1 dargestellten erfindungsgemäßen Gasdosierventil 1 hingegen ist der Ventilsitz 5 durch den Anschlag 20 lediglich gegen eine Bewegung in Richtung zum Saugrohr 15 hin gesichert. Da der Druck im Saugrohr 15 nicht nur auf die durch die Schlitze 8 des Ventilsitzes 5 freiliegenden Flächen der Ringe 25 des Schließkörpers 6 wirkt, sondern auch auf die viel größere, zum Saugrohr 15 ausgerichtete Fläche des beweglichen Ventilsitzes 5, kann der Druck im Saugrohr 15 den Schließkörper 6 auch bei einer eher geringen Spannkraft der Rückstellfeder 9 nicht von dem Ventilsitz 5 abheben, da der Ventilsitz 5 weiterhin gegen den Schließkörper 6 gedrückt würde, und sich der Ventilsitz 5 zusammen mit der Schließkörperführung 10 und dem Schließkörper 6 als eine Einheit axial zum Ventilinneren hin beweget, bis der Anschlagring 21 an der Anschlagfläche 22 der Magnetbasis18 ansteht. Wenn der Druck im Saugrohr 15 wieder nachlässt, drückt die Rückstellfeder die Einheit aus Schließkörper 6, Ventilsitz 5 und Schließkörperführung 10 wieder zurück in die Ausgangslage, in der der Ventilsitz 5 am Anschlag 20 ansteht. Bei der gesamten Auslenkbewegung der Einheit aus Schließkörper 6, Ventilsitz 5 und Schließkörperführung 10 bleibt während des Flüssigtreibstoffbetriebsmodus die Dichtfunktion des Gasdosierventils gewährleistet.

Die Ventilsitzführung 4 ist gegenüber dem Ventilsitz 5 mittels zweier Dichtungselemente 23, 24 abgedichtet, die jeweils oberhalb und unterhalb der Stufe des Anschlags 20 angeordnet sind. Die Dichtungselemente 23, 24 sind vorzugsweise O-Ringe, die in Ringnuten an der Umfangfläche des Ventilsitzes 5 angeordnet sind. Neben der Dichtungsfunktion wirken die Dichtungselemente 23, 24 bei den Bewegungen des Ventilsitzes als Abstreifer für Verunreinigungen, die in den Spalt zwischen Ventilsitz 5 und Ventilsitzhülse 3 eingedrungen sind. Für die Gewährleistung der Dichtungsfunktion würde zwar ein einzelnes Dichtungselement ausreichen, es ist jedoch vorteilhaft, den Anschlag 20 von beiden Seiten her vor Verunreinigungen zu schützen, da bei einem Anlagern von Schmutz auf dem Anschlag 20 die Ruhelage des Ventilsitzes 5 (d.h. die Position während des Gasbetriebsmodus) nicht mehr genau definiert ist, und der Abstand zwischen dem Schließkörper 6 und dem Ventilsitz wäre bei vollem Hub des Schließkörpers verändert oder gar, radial gesehen, ungleichmäßig, falls der Ventilsitz schräg in der Ventilsitzführung 4 angeordnet wäre.

Fig. 2 zeigt eine schematische Darstellung eines Zylinders 31 eines mit dem erfindungsgemäßen Gasdosierventil 1 ausgestatteten Zweistoffmotors 17. Das Gasdosierventil 1 ist im Saugrohr knapp stromaufwärts vom Gaswechselventil 19 angeordnet. Das Gasdosierventil 1 ist in Fig. 2 schematisiert dargestellt, wobei die möglichen technischen Ausführungen der Gaszuführung, die etwa als das Saugrohr 15 umschließenden Ringkanal mit Öffnungen in das Saugrohr 15 ausgeführt sein kann, dem Fachmann bekannt sind. Das Gaswechselventil 19 öffnet und schließt in bekannter Weise den Einlass zum Brennraum 16 des Zylinders 31 beim Ansaugtakt gemäß der Position des Kolbens 27. Das Gaswechselventil 19 wird von einer Nockenwelle 28 betätigt. Eine zweite Nockenwelle 28' betätigt ein zweites Gaswechselventil 19', um beim Ausstoßtakt die Abgase in eine Abgasleitung 29 auszustoßen. Während des Flüssigbrennstoffbetriebsmodus, bei dem das Gasdosierventil 1 deaktiviert ist, wird über eine Direkteinspritzung 29 flüssiger Brennstoff in bekannter Weise direkt in den Brennraum 16 eingespritzt.

Fig. 3 zeigt eine schematische Darstellung eines mit dem Gasdosierventil ausgestatteten Zweistoffmotors 17 mit sechs Zylindern, die jeweils gemäß Fig. 2 ausgebildet sind. Die Ladeluft wird über eine gemeinsame Ladeluftzufuhr 30 über die einzelnen Saugrohre 15 den Zylindern 31 zugeführt. An jedem Saugrohr 15 ist ein Gasdosierventil 1 angeordnet, welches im Gasbetriebsmodus dem Zylinder 31 Brenngas zuführt, und jeder Zylinder ist weiters mit einer Direkteinspritzung 26 für den Flüssigbrennstoffbetrieb versehen.

### Bezugszeichen:

Gasdosierventil 1
Gehäuse 2
Ventilsitzhülse 3
Ventilsitzführung 4
Ventilsitz 5
Schließkörper 6
Elektromagnet 7
Schlitze 8
Rückstellfeder 9
Schließkörperführung 10
Ankerplatte 11
Gaseinlass 12
Gaskanal 13
Gasauslass 14
Saugrohr 15
Brennraum 16
Zweistoffmotor 17
Magnetbasis 18
Gaswechselventil 19, 19'
Anschlag 20
Anschlagring 21
Anschlagfläche 22
Gaskanalseitiges Dichtungselement 23
Saugrohrseitiges Dichtungselement 24
Ringe 25
Direkteinspritzung 26
Kolben 27
Nockenwelle 28, 28'
Abgasleitung 29
Ladeluftzufuhr 30
Zylinder 31

## Patentansprüche

1. Gasdosierventil (1) für einen Zweistoffmotor (17), das einen verlagerbaren Schließkörper (6) aufweist, der in einer an einen Ventilsitz (5) angelagerten Position das Gasdosierventil (1) schließt und in einer von dem Ventilsitz (5) abgehobenen Position das Gasdosierventil (1) öffnet, wobei der Ventilsitz (5) entlang einer Ventilsitzführung (4) verschiebbar angeordnet ist, **dadurch gekennzeichnet, dass** das Gasdosierventil (1) in einem Gasbetriebsmodus, bei dem das Gasdosierventil (1) Brenngas über einen Gaskanal (13) in ein Saugrohr (15) des Zweistoffmotors (17) dosiert, und in einem Flüssigbrennstoffbetriebsmodus, in dem das Gasdosierventil (1) gegen den im Saugrohr (15) vorherrschenden Druck dichtend geschlossen bleibt, betätigbar ist, und dass das Verhältnis der dem Schließkörper (6) zugewandten Oberfläche des Ventilsitzes (5) zu der dem Saugrohr (15) zugewandten Oberfläche des Ventilsitzes (5) so gewählt ist, dass der vom Gaskanal (13) auf den Ventilsitz (5) wirkende Druck des Brenngases während des Gasbetriebsmodus in Axialrichtung stets eine größere Kraft auf den Ventilsitz (5) ausübt, als die Kraft, die vom maximalen Druck im Saugrohr (15) auf den Ventilsitz (5) in der Gegenrichtung ausgeübt wird, wobei der Ventilsitz (5) im Gasbetriebsmodus aufgrund des Brenngasdrucks im Gaskanal (13) vom Schließkörper (6) weg gegen einen Anschlag (20) im Gasdosierventil (1) gedrückt und in seiner betriebsmäßigen Position gehalten wird, und wobei der Ventilsitz (5) im Flüssigbrennstoffbetriebsmodus, in welchem der Druck im Inneren des Gasdosierventils durch die unterbrochene Gaszufuhr sinkt, vom Druck im Saugrohr (15) dichtend gegen den Schließkörper (6) gedrückt wird.

2. Gasdosierventil (1) nach Anspruch 1, **dadurch gekennzeichnet, dass** der Ventilsitz (5) eine zum Schließkörper (6) hin gerichtete und vom Ventilsitz (5) abstehende Schließkörperführung (10) aufweist, auf der der Schließkörper (6) verschiebbar gelagert ist.

3. Gasdosierventil (1) nach, einem der Ansprüche 1 oder 2, **dadurch gekennzeichnet, dass** der Ventilsitz (5) als eine Vielzahl kreisförmiger, konzentrischer Schlitze (8) ausgebildet ist.

4. Gasdosierventil (1) nach einem der Ansprüche 1 bis 3, **dadurch gekennzeichnet, dass** der Schließkörper (6) mit einer Ankerplatte (11) verbunden ist, die von einem Elektromagnet (7) betätigt wird.

5. Gasdosierventil (1) nach einem der Ansprüche 1 bis 4, **dadurch gekennzeichnet, dass** der Elektromagnet (7) in einer Magnetbasis (18) angeordnet ist, die zentral im Gaskanal (13) angeordnet ist.

6. Gasdosierventil (1) nach einem der Ansprüche 1 bis 5, **dadurch gekennzeichnet, dass** das Gasdosierventil (1) ein trockenlaufendes Gasdosierventil ist.

7. Gasdosierventil (1) nach einem der Ansprüche 1 bis 6, **dadurch gekennzeichnet, dass** in der Ventilsitzführung (4) auf beiden Seiten des Anschlags (20) jeweils ein Dichtungselement (23,24) angeordnet ist.

## Claims

1. A gas metering valve (1) for a dual fuel engine (17), which has a displaceable closing body (6) which, in a position of resting against a valve seat (5), closes the gas metering valve (1) and, in a position of being lifted off from the valve seat (5), opens the gas metering valve (1), wherein the valve seat (5) is movably situated along a valve seat guide (4), **characterized in that** the gas metering valve (1) is actuatable in a gas operating mode, in which the gas metering valve (1) meters combustion gas via a gas channel (13) into an intake manifold (15) of the dual fuel engine (17), and in a liquid fuel operating mode, in which the gas metering valve (1) remains sealing closed against the pressure prevalent in the intake manifold (15), and that the relationship of the surface of valve seat (5) facing closing body (6) to the surface of valve seat (5) facing intake manifold (15) is selected in such a manner that the pressure of the combustion gas acting from gas channel (13) upon valve seat (5) during the gas operating mode always exerts a greater force onto valve seat (5) in the axial direction than the force exerted by the maximum pressure in intake manifold (15) onto valve seat (5) in the opposite direction, wherein the valve seat (5) in the gas operating mode, owing to the combustion gas pressure in the gas channel (13), is pressed away from the closing body (6) against a stop (20) in the gas metering valve (1) and is kept in its operating position, and wherein the valve seat (5) in the liquid fuel operating mode, in which the pressure in the interior of the gas metering valve is lowered by the interrupted gas supply, is sealingly pressed by the pressure from the intake manifold (15) against the closing body (6).

2. The gas metering valve (1) according to Claim 1, **characterized in that** the valve seat (5) has a closing body guide (10) directed towards the closing-body (6) and projecting from the valve seat (5), on which closing body guide (10) the closing body (6) is movably mounted.

3. The gas metering valve (1) according to one of Claims 1 or 2, **characterized in that** the valve seat (5) is configured as a plurality of circular, concentric slots (8).

4. The gas metering valve (1) according to one of Claims 1 through 3, **characterized in that** the closing body (6) is connected to an armature plate (11) which is actuated by an electromagnet (7).

5. The gas metering valve (1) according to one of Claims 1 through 4, **characterized in that** the electromagnet (7) is situated in a magnet-base (18), which is centrally situated in the gas channel (13).

6. The gas metering valve (1) according to one of Claims 1 through 5, **characterized in that** the gas metering valve (1) is a dry running gas metering valve.

7. The gas metering valve (1) according to one of Claims 1 through 6, **characterized in that**, in the valve seat guide (4), respectively one sealing element (23, 24) is situated on each side of the stop (20).

## Revendications

1. Soupape de dosage de gaz (1) pour un moteur à deux combustibles (17), qui présente un corps de fermeture déplaçable (6), qui ferme la soupape de dosage de gaz (1) dans une position appliquée sur un siège de soupape (5) et ouvre la soupape de dosage de gaz (1) dans une position soulevée du siège de soupape (5), dans laquelle le siège de soupape (5) est agencée à coulissement le long d'un guide de siège de soupape (4), **caractérisée en ce que** la soupape de dosage de gaz (1) peut être commandée dans un mode de fonctionnement au gaz, dans lequel la soupape de dosage de gaz (1) dose du combustible gazeux via un canal de gaz (13) dans un tuyau d'aspiration (15) du moteur à deux combustibles (17), et dans un mode de fonctionnement au combustible liquide, dans lequel la soupape de dosage de gaz (1) reste fermée de manière étanche à l'encontre de la pression régnant dans le tuyau d'aspiration (15), et le rapport de la surface du siège de soupape (5) tournée vers le corps de fermeture (6) à la surface du siège de soupape (5) tournée vers le tuyau d'aspiration (15) est sélectionné de sorte que la pression du combustible gazeux opérant par le canal de gaz (13) sur le siège de soupape (5) au cours du mode de fonctionnement au gaz exerce toujours sur le siège de soupape (5) dans la direction axiale une force plus grande que la force qui est exercée par la pression maximale sur le siège de soupape (5) dans le tuyau d'aspiration (15) en sens inverse, dans laquelle le siège de soupape (5) est pressé dans le mode de fonctionnement au gaz en raison de la pression du combustible gazeux dans le canal de gaz (13) depuis le corps de fermeture (6) contre une butée (20) dans la soupape de dosage de gaz (1) et est maintenu dans sa position de fonctionnement, et dans laquelle le siège de soupape (5) est pressé de manière étanche, dans le mode de fonctionnement au combustible gazeux, dans laquelle la pression à l'intérieur de la soupape de dosage de gaz est réduite du fait de l'interruption d'acheminement de gaz, par la pression dans le tuyau d'aspiration (15) contre le corps de fermeture (6).

2. Soupape de dosage de gaz (1) selon la revendication 1, **caractérisée en ce que** le siège de soupape (5) présente un guide de corps de fermeture (10) dirigé vers le corps de fermeture (6) et distant du siège de soupape (5), lequel guide est monté à coulissement sur le corps de fermeture (6).

3. Soupape de dosage de gaz (1) selon l'une quelconque des revendications 1 ou 2, **caractérisée en ce que** le siège de soupape (5) se présente sous la forme d'une pluralité de fentes circulaires concentriques (8).

4. Soupape de dosage de gaz (1) selon l'une quelconque des revendications 1 à 3, **caractérisée en ce que** le corps de fermeture (6) est relié à une plaque d'ancrage (11) qui est commandée par un électroaimant (7).

5. Soupape de dosage de gaz (1) selon l'une quelconque des revendications 1 à 4, **caractérisée en ce que** l'électroaimant est agencé sur une base d'aimant (18) qui est disposée de manière centrale dans le canal de gaz (13).

6. Soupape de dosage de gaz (1) selon l'une quelconque des revendications 1 à 5, **caractérisée en ce que** la soupape de dosage de gaz (1) est une soupape de dosage de gaz opérant à sec.

7. Soupape de dosage de gaz (1) selon l'une quelconque des revendications 1 à 6, **caractérisée en ce qu'**un élément d'étanchéité (23, 24) est agencé respectivement dans le guide de siège de soupape (4) des deux côtés de la butée (20).
